# EUROPÄISCHE PATENTANMELDUNG

(11) **EP 0 765 099 A2**
(43) Veröffentlichungstag der Anmeldung: **26.03.1997**
(21) Anmeldenummer: 96113325.3
(22) Anmeldetag: 20.08.1996
(51) Int. Cl.: H04Q 11/04, H04L 12/56

(54) **Verfahren zum Vermitteln von Schmalband-Teil-Leitungsbündeln zwischen Kommunikationssystemen über ein ATM-Kommunikationsnetz**

(30) Priorität: 19.09.1995 DE 19534754
(71) Anmelder: SIEMENS AKTIENGESELLSCHAFT, 80333 München (DE)
(72) Erfinder: Kienberger, Helmut, Dipl.-Ing., 81475 München (DE)

(57) **Zusammenfassung**

Mit Hilfe des erfindungsgemäßen Verfahren werden Nachrichten- und Signalisierungsinformationen (ni,si) von Teil-Leitungsbündeln (TLB1..3) eines einen zentralen Signalisierungskanal (CCS) aufweisenden Leitungsbündels (LB) eines Kommunikationssystems (KS1..3) über ein ATM-Kommunikationsnetz (KN) an weitere Kommunikationssysteme (KS1..3) vermittelt. Hierbei werden die Nachrichten- und Signalisierungsinformationen (ni,si) zellenweise virtuellen Kanälen (VC1..34) eines ein Teil-Leitungsbündel (TLB1..3) repräsentierenden virtuellen Pfades (VP1..3) zugeordnet, wobei die im zentralen Signalisierungskanal (CCS) übermittelten Signalisierungsinformationen (si) Teil-Leitungsbündel-gemäß getrennt und nach der Vermittlung über das ATM-Kommunikationsnetz (KN) in den zentralen Signalisierungskanal (CCS) eines weiteren Leitungsbündels (LB) eingefügt werden.

## Beschreibung

Derzeitige, nach dem Zeitmultiplexverfahren vermittelnde Kommunikationssysteme, insbesondere Schmalband-Vermittlungsanlagen, sind untereinander über einzelne Schmalband-Festverbindungen oder Schmalband-Leitungsbündeln verbunden. Schmalband-Verbindungen stellen insbesondere PCM-orientierte Verbindungen, d.h. digitalisierte Fernsprechverbindungen oder digitale Informationen übermittelnde Verbindungen mit bis zu einer Übertragungsgeschwindigkeit von 64 kbit/s dar. Schmalband-Leitungsbündel werden durch Multiplexen der Nachrichten- und Signalisierungsinformationen mehrerer Schmalband-Verbindungen gebildet, wobei standardisierte Leitungsbündel 24 oder 30 Schmalband-Verbindungen umfassen und eine Übertragungsgeschwindigkeit von 1544 kbit/s oder 2048 kbit/s aufweisen. Die Signalisierung für die gemultiplexten Schmalband-Verbindungen wird in einer zusätzlichen Schmalband-Verbindung - allgemein als zentraler Signalisierunskanal bekannt - übertragen. Die einzelnen, zwischen den Kommunikationssystemen vorgesehenen Schmalbandverbindungen oder Leitungsbündel werden über durch öffentliche oder private Netzbetreiber zur Verfügung gestellte Festverbindungen vermittelt.

Zukünftig sind für die Vermittlung bzw. Übermittlung der Nachrichten- und Signalisierungsinformationen von insbesondere Leitungsbündeln nach dem Asynchron-Transfer-Modus wirkende Kommunikationsnetze - in der Fachwelt als ATM-Kommunikationssysteme bekannt - vorgesehen. Hierzu ist im relevanten Standardisierungsgremium - ATM-Forum -in einem CES-Standard (Circuit Emulation Service) vorgeschlagen worden, die zusammengefaßten Nachrichten- und Signalisierungsinformationen von Leitungsbündeln in Zellen einzufügen und transparent über permanente virtuelle Verbindungen eines ATM-Kommunikationsnetzes zu vermitteln. Die für eine Vermittlung in einem Kommunikationsnetz vorgesehenen Zeilen weisen einen 5 Byte umfassenden Zellkopf - Header - und einen 48 Byte umfassenden Nutzteil - Payload - auf. In den Nutzteil werden die zu übermittelten Nachrichteninformationen mit Hilfe von Zwischenspeichern eingefügt. Der Zellkopf enthält insbesondere die Routinginformationen, insbesondere die virtuellen Kanal- und Pfadinformationen und die Rufreferenznummer - call reference number. Mit Hilfe der Routinginformationen werden die Zellen über die ATM-Kommunikationssysteme des ATM-Kommunikationsnetzes vermittelt. Eine Vermittlung einzelner Schmalband-Verbindungen aus einem Leitungsbündel über das ATM-Kommunikationsnetz zu unterschiedlichen Kommunikationssystemen ist nicht vorgesehen.

Der Erfindung liegt die Aufgabe zugrunde, Schmalband-Verbindungen eines Leitungsbündels eines Kommunikationssystems über ATM-Kommunikationsnetze zu unterschiedlichen weiteren Kommunikationssystemen zu vermitteln. Die Aufgabe wird durch die Merkmale des Anspruchs 1 gelöst.

Der wesentliche Aspekt des erfindungsgemäßen Verfahrens ist darin zu sehen, daß in den Kommunikationssystemen die Nachrichteninformationen der betreffenden Schmalband-Verbindungen bereits vorgegebenen Teil-Leitungsbündeln des Leitungsbündel zugeordnet, zellenweise verpackt und jeweils virtuellen Kanälen eines jeweils ein Teil-Leitungsbündel repräsentierenden Pfades einer permanenten virtuellen Verbindung oder vermittelten permanenten virtuellen Verbindung - Anspruch 2 - zugeordnet werden. Die zusammengefaßten Signalisierungsinformationen werden Teil-Leitungsbündel-gemäß getrennt sowie jeweils dem betreffenden, ein Teil-Leitungsbündel repräsentierenden virtuellen Pfad zugeordnet.

Nach der zellenweisen, transparenten Übermittlung über die virtuellen Kanäle der permanenten virtuellen Pfade des ATM-Kommunikationsnetzes (KN) werden die Nachrichten- und Signalisierungsinformationen entpackt und den jeweiligen Schmalband-Verbindungen des betreffenden, eingerichteten Teil-Leitungsbündels des mit jeweils einem weiteren Kommunikationssystem (KS) verbundenen Leitungsbündels zugeordnet.

Die wesentlichen Vorteile des erfindungsgemäßen Verfahren sind darin zu sehen, daß durch die Flexibilität bei der Bildung und Vermittlung der Teil-Leitungsbündel die vermittlungstechnischen Ressourcen der Zeitmultiplex-Kommunikationssysteme und des ATM-Kommunikationsnetzes maximal genutzt werden. Die Flexibilität bei der Teil-Leitungsbündel-Bildung wird dadurch erreicht, daß sowohl die Nachrichten- als auch die Signalisierungsinformationen der durch das jeweilige Zeitmultiplex-Kommunikationssystem eingerichteten Teil-Leitungsbündel Teil-Leitungsbündel-gemäß, d.h. mit angepaßter Bitrate, im ATM-Kommunikationsnetz vermittelbar sind.

Gemäß einer vorteilhaften Weiterbildung des erfindungsgemäßen Verfahrens werden die Nachrichten- und Signalisierungsinformationen über virtuelle Kanäle von permanenten virtuellen Pfaden und/oder von vermittelten permanenten virtuelle Pfaden des ATM-Kommunikationsnetzes vermittelt - Anspruch 2. Bei Verwendung von vermittelten permanenten virtuellen Pfaden bzw. Verbindungen werden die vermittlungstechnischen Ressourcen des ATM-Kommunikationsnetzen am effizientesten genutzt, da diese nur bei einer Übermittlung von Nachrichten- und Signalisierungsinformationen dem ATM-Kommunikationsnetz entzogen werden. Prinzipiell werden permanente virtuelle Verbindungen - auch vermittelte - durch administrative Eingaben im ATM-Kommunikationsnetz eingestellt, d.h. die virtuellen Kanäle des jeweiligen virtuellen Pfades des Teil-Leitungsbündel werden durch administrative Eingaben fest eingerichtet. Bei der Einrichtung wird der erforderliche Umfang der zu übermittelnden Informationsmenge für die einzelnen virtuellen Kanäle und Pfade durch die Angabe von Bitraten im ATM-Kommunikationsnetz beantragt. Die permanente und die vermittelte permanente Verbindung unterscheiden sich in der Vermittlungsart und damit in der Art der Beanspruchung der vermittlungstechnischen Ressourcen des ATM-Kommunikationsnetzes. Bei der vermittelten permanenten virtuellen Verbindung werden die vermittlungstechnischen Ressourcen erst bei einer vorgesehenen Übermittlung von Informationen bereitgestellt.

Nach einer weiteren Ausgestaltung des erfindungsgemäßen Verfahrens werden die ein Teil-Leitungsbündel betreffenden Signalisierungsinformationen zusammengefaßt und einem separaten virtuellen Kanal zugeordnet, der mit dem das jeweilige Teil-Leitungsbündel repräsentierenden virtuellen Pfad zusammengefaßt ist - Anspruch 3. Durch dieses Zusammenfassen der Teil-Leitungsbündel-relevanten Signalisiervngsinformationen und Einfügen in einen zusätzlichen virtuellen Kanal, der dem das jeweilige Teil-Leitungsbündel repräsentierenden virtuellen Pfad zugeordnet ist, ist die Vermittlung der jeweiligen Signalisierungsinformationen mit minimalsten vermittlungstechnischen Ressourcen des ATM-Kommunikationsnetzes möglich, da die für die Übermittlung der Signalisierungsinformationen erforderliche Bitrate individuell auf die tatsächlich zu übermittelnde Informationsmenge angepaßt bzw. eingestellt werden kann.

Weitere vorteilhaft Ausgestaltungen des erfindungsgemäßen Verfahren sind den weiteren Ansprüchen zu entnehmen.

Im folgenden wird das erfindungsgemäße Verfahren anhand eines Blockschaltbildes näher erläutert. Das Blockschaltbild zeigt zwei Kommunikationssysteme KS1, KS2 und ein drittes Kommunikationssystem ist durch die Bezeichnung KS3 angedeutet. In jedem der nach dem Zeitmultiplex-Vermittlungsverfahren wirkenden Kommunikationssysteme KS1...3 sind Leitungsbündel-Anschlußeinrichtungen SLM vorgesehen, die jeweils mit einem, durch eine Steuereinrichtung ST gesteuerten Koppelfeld KF verbunden ist. An die Kommunikationssysteme KS1...3 sind Schmalband-Kommunikationsendeinrichtungen - nicht dargestellt - angeschlossen, durch die Schmalband-Verbindungen mit einer Übertragungsgeschwindigkeit von 64 kBit/s entweder intern, d.h. innerhalb des jeweiligen Kommunikationssystems KS1...3, oder extern, d.h. Schmalband-Verbindungen zu einem weiteren Kommunikationssystem KS1...3 aufgebaut werden. Ob eine interne oder externe Vermittlung der Schmalband-Verbindungen durchzuführen ist, wird mit Hilfe der Bewertung der von den Schmalband-Kommunikationsendgeräten übermittelten Signalisierungsinformation ermittelt. Die interne Vermittlung ist für das erfindungsgemäße Verfahren ohne Bedeutung und im weiteren nicht mehr erläutert.

Für das Ausführungsbeispiel sei angenommen, daß zwischen dem ersten und zweiten Kommunikationssystem KS1, KS2 15 Schmalband-Verbindungen SV1...15, ein erstes Teil-Leitungsbündel TLB1 bildend, und für die Vermittlung zum dritten Kommunikationssystem KS3 weitere 15 Schmalband-Verbindungen SV15 bis SV30, ein zweites Teil-Leitungsbündel TLB2 bildend, vorgesehen sind. Für diese 30 Schmalband-Verbindungen SV1...30 ist ein gemeinsamer Signalisierungskanal CCS vorgesehen, über den die Signalisierungsinformationen si paketorientiert übermittelt werden. Die hierfür erforderlichen Signalisierungsmeldungen sind beispielsweise gemäß dem zentralen Zeichenkanal für ISDN-Verbindungen realisiert. Alternativ sind zwischen privaten Kommunikationssystemen übliche erweiterte Signalisierungsprotokolle implementierbar. Über die 30 Schmalband-Verbindungen SV1...30 werden Nachrichteninformationen ni - beispielsweise digitalisierte Sprachinformationen - übermittelt. Das erste und zweite Teil-Leitungsbündel TLB1...2 und der zentrale Signalisierungskanal CCS bilden das Leitungsbündel LB, das durch eine einzige Verbindung V mit einer Übertragungsgeschwindigkeit von 2048 kBit/s repräsentiert ist. Hierbei sind die Schmalband-Verbindungen SV1...30 sowie der zentrale Signalisierungskanal CCS - jeweils eine Übertragungsgeschwindigkeit von 64 kBit/s - zu einem Summenbitstrom von 2048 kBit/s gemultiplext - nicht dargestellt - und werden über eine einzige Verbindung V zu einer Interworking-Einheit IWU geführt. Die Schmalband-Verbindungen SV1...30 sowie der zentrale Zeichenkanal CCS sind bidirektional realisiert, d.h. weisen beide Übertragungsrichtungen - kommend und gehend - auf.

In der Interworking-Einheit IWU1 werden die über die Verbindung V übermittelten, PCM-orientierten Nachrichten- und Signalisierungsinformationen ni,si ATM-Kommunikationsnetz-gemäß in Zellen verpackt. Hierbei werden die in Zellen verpackten Nachrichteninformationen ni der ersten bis fünfzehnten Schmalband-Verbindungen SV1...15 jeweils einem ersten bis fünfzehnten virtuellen Kanal VC1...15 zugeordnet. Dies bedeutet, daß für jede Schmalband-Verbindung SV1...15 ein virtueller Kanal VC1...15 vorgesehen ist. Diese 15 virtuellen Kanäle VC1...15 sind einem ersten virtuellen Pfad VP1 zugeordnet. Dieser erste virtuelle Pfad VP1 repräsentiert das erste Teil-Leitungsbündel TLB1. Analog hierzu werden die in Zellen verpackten Nachrichteninformationen ni der sechzehnten bis dreißigsten Schmalband-Verbindungen SV16...30 des zweiten Teil-Leitungsbündels TLB2 jeweils virtuellen Kanälen VC16...30 zugeordnet, die wiederum in einem zweiten virtuellen Pfad VP2 zusammengefaßt sind. Des weiteren ist in der ersten Interworking-Einheit IWU1 eine Signalisierungseinheit SU enthalten, an die die paketorientierten Signalisierungsinformationen si des zentralen Zeichenkanals CSS geführt sind. In der Signalisierungseinheit SU werden die ankommenden Signalisierungsinformationen Teil-Leitungsbündel-gemäß getrennt, d.h. anhand der in die jeweiligen Paketen eingefügten Routinginformationen werden die ankommenden Signalisierungsinformationen si dahingehend überprüft, ob sie einer Schmalband-Verbindung SV1...30 des ersten oder zweiten Teil-Leitungsbündels TLB1, TLB2 angehören. Entsprechend dem Überprüfungsergebnis werden die Signalisierungsinformationen si in Zellen eingefügt und einem zweiunddreißigsten virtuellen Kanal VC32 - repräsentiert das erste Teil-Leitungsbündel TLB1 - oder einem dreiunddreißigsten virtuellen Kanal VC33 - entspricht dem zweiten Teil-Leitungsbündel TLB2 - zugeordnet. Die beiden virtuellen Pfade VP1, VP2 einschließlich der zugeordneten virtuellen Kanäle VC1...30 und der zusätzlichen virtuellen Kanäle VC32, VC33 werden über einen einzigen physikalischen Anschluß - nicht dargestellt - an ein ATM-Kommunikationssystem ATM-KS eines ATM-Kommunikationsnetzes KN übermittelt, in dem der zweiunddreißigste virtuelle Kanal VC32 über den ersten virtuellen Pfad VP1 und der dreiunddreißigste virtuelle Kanal VC33 über den zweiten virtuellen Pfad VP2 übermittelt wird. Mit Hilfe des ATM-Kommunikationssystems ATM-KS werden die Nachrichten- und Signalisierungsinformationen ni,si des ersten Teil-Leitungsbündels TLB1 zu einer zweiten Interworking-Einheit IWU2 über den ersten virtuellen Pfad VP1 vermittelt. Der erste sowie auch der zweite und ein dritter - wird nachfolgend erläutert - virtueller Pfad VP1...3 wird über permanente virtuelle Verbindungen, d.h. permanente virtuelle Kanäle geführt. Alternativ sind vermittelte permanente virtuelle Verbindungen realisierbar. Beide permanente Verbindungen werden durch administrative Eingaben - nicht dargestellt - in den betroffenen ATM-Kommunikationssystemen ATM-KS eingerichtet. Bei einer permanenten virtuellen Verbindung sind in jedem ATM-Kommunikationssystem ATM-KS die zu vermittelnden virtuellen Kanäle VC direkte in den Vermittlungsspeichern angegeben, d.h. permanent festgelegt. Bei vermittelten permanenten virtuellen Verbindungen werden die Zuordnung der virtuellen Kanäle anhand der Schmalband-Verbindungs-individuellen Rufnummer - insbesondere der Call Reference Number - ermittelt. Dies bedeutet, daß bei vermittelten permanenten virtuellen Verbindungen die erforderlichen vermittlungstechnischen Ressourcen in den ATM-Kommunikationssystemen ATM-KS erst bei Vorliegen von zu übermittelnden Zellen bzw. Nachrichten- und Signalisierungsinformationen ni,si verfügbar gemacht werden.

In der zweiten Interworking-Einheit IWU2 werden die in Zellen verpackten Nachrichten- und Signalisierungsinformationen ni,si der 15 virtuellen Kanäle VC1...15 in PCM-orientierte Informationen umgesetzt, d.h. entpackt und über eine Verbindung V über einen zeitmuliplexorientierten Informationsstrom mit einer Übertragungsgeschwindigkeit von 2048 kBit/s an das zweite Kommunikationssystem KS2 übermittelt. In diesem werden die Nachrichteninformationen ni den jeweiligen Schmalband-Verbindungen SV1...15 zugeordnet und an durch die Signalisierung vorgegebenen Kommunikationsendgeräte - nicht dargestellt - weitervermittelt. Im zweiten Kommunikationssystem KS2 sind die ersten 15 Schmalband-Verbindungen SV1...15 ebenfalls dem ersten Teil-Leitungsbündel TLB1 zugeordnet. Die weiteren 15 Schmalband-Verbindungen SV16...30 sind in der bereits erläuterten Funktionsweise zu einem dritten virtuellen Pfad VP3 zusammengefaßt. Sowohl der zweite als auch der dritte virtuelle Pfad VP2, VP3 werden mit Hilfe des ATM-Kommunikationssystems ATM-KS bzw. des ATM-Kommunikationsnetzes an ein durch die Bezeichnung KS3 angedeutetes drittes Kommunikationssystem KS3 vermittelt. Beim zweiten Kommunikationssystem KS2 bilden das erste und dritte Teil-Leitungsbündel TLB1, TLB3 das Leitungsbündel LB.

Eine in der zweiten Interworking-Einheit IWU2 angeordnete, gemäß der ersten Interworking-Einheit IWU1 realisierte Signalisierungseinheit SU sammelt die über den zweiunddreißigsten virtuellen Kanal VC32 und die einen vierunddreißigsten virtuellen Kanal VC34 - vom dritten Kommunikationssystem - übermittelten Signalisierungsinformationen si und ordnet sie einem zentralen Zeichenkanal CCS zu, der innerhalb des gemultiplexten Informationsstromes über die Verbindung V an das zweite Kommunikationssystem KS2 geführt wird. In umgekehrter Richtung werden die vom zweiten Kommunikationssystem KS2 über den zentralen Signalisierungskanal CCS übermittelten Signalisierungsinformationen si Teil-Leitungsbündel-gemäß getrennt und jeweils einem separaten virtuellen Kanal VC32, VC34 zugeordnet, wobei der zweiunddreißigste virtuelle Kanal VC32 dem ersten virtuellen Pfad VP1 und der vierunddreißigste virtuelle Kanal VC34 einem dritten virtuellen Pfad VP3 zugeordnet ist.

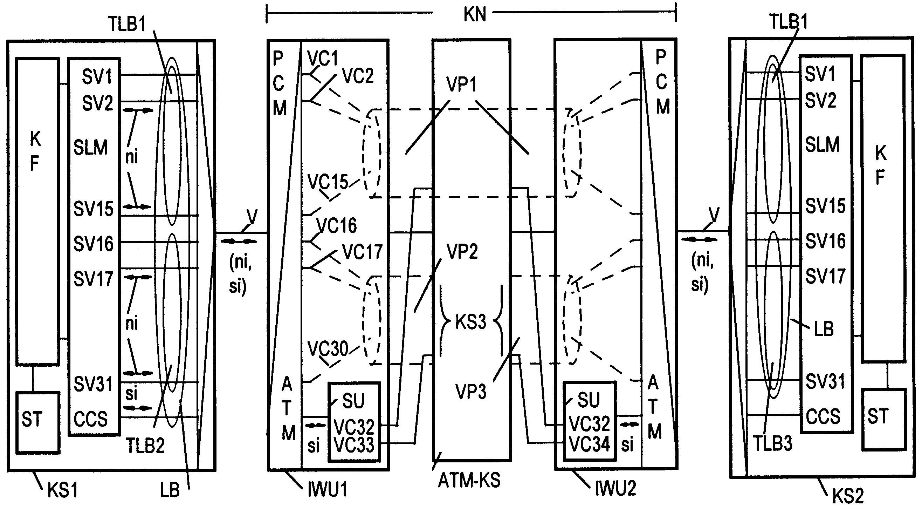

## Patentansprüche

1. Verfahren zum Vermitteln von zeitmultiplexorientierte Nachrichten- und Signalisierungsinformationen (ni,si) umfassende Schmalband-Wählverbindungen (SV1..30) zwischen Zeitmultiplex-Kommunikationssystemen (KS1..3),
- bei dem in den Kommunikationssystemen (KS1..3) die zu vermittelnden Nachrichteninformationen (ni) der Schmalband-Wählverbindungen (SV1..30) jeweils zwischen den Kommunikationssystemen (KS) eingerichteten Teil-Leitungsbündeln (TLB1..3) eines eine standardisierte Übertragungsgeschwindigkeiten aufweisenden, bidirektionalen Leitungsbündels (LB) zugeordnet werden, wobei die Signalisierungsinformationen (si) der Schmalband-Verbindungen (SV1..30) in einer zusätzlichen Schmalband-Verbindung (CCS) des Leitungsbündels (LB) zusammengefaßt sind,
- bei dem das Leitungsbündel (LB) der Kommunikationssysteme (KS1..3) an ein ATM-Kommunikationsnetz (KN) geführt ist,
- bei dem jeweils die Nachrichteninformationen (ni) eines Teil-Leitungsbündel (TLB1..3) zellenweise virtuellen Kanälen (VC1..30) zugeordnet werden, die jeweils zu einem ein Teil-Leitungsbündel (TLB1..3) repräsentierenden Pfad (VP1..3) zusammengefaßt sind,
- bei dem die zusammengefaßten Signalisierungsinformationen (si) Teil-Leitungsbündel-gemäß getrennt und jeweils dem betreffenden, ein Teil-Leitungsbündel (TLB1..3) repräsentierenden virtuellen Pfad (VP1..3) zugeordnet werden,
- bei dem die zellenweise über die virtuellen Kanäle (VC1..30) der virtuellen Pfade (VP1..3) des ATM-Kommunikationsnetzes (KN) transparent übermittelten Nachrichten- bzw. Signalisierungsinformationen (ni,si) entpackt und den jeweiligen Schmalband-Verbindungen (SV1..30) bzw. der zusätzlichen Schmalband-Verbindung (CCS) des betreffenden, eingerichteten Teil-Leitungsbündeln (TLB1..3) des mit jeweils einem weiteren Kommunikationssystem (KS) verbundenen Leitungsbündels (LB) zugeordnet werden.

2. Verfahren nach Anspruch 1, dadurch **gekennzeichnet,** daß die Nachrichten- und Signalisierungsinformationen (ni,si) über virtuelle Kanäle (VC1..30) von permanenten virtuellen und/oder vermittelten permanenten virtuellen Pfaden (VP1..3) des ATM-Kommunikationsnetzes (KN) vermittelt werden.

3. Verfahren nach einem der Ansprüche 1 oder 2, dadurch **gekennzeichnet,** daß die ein Teil-Leitungsbündel (TLB1..3) betreffenden Signalisierungsinformationen (si) zusammengefaßt und einem separaten virtuellen Kanal (VC32..34) zugeordnet werden, der mit dem das jeweilige Teil-Leitungsbündel (TLB1..3) repräsentierenden virtuellen Pfad (VP1..3) zusammengefaßt ist.

4. Verfahren nach einem der Ansprüche 1 bis 3, dadurch **gekennzeichnet,** daß die Signalisierungsinformationen (si) gemäß dem ISDN-standardisierten zentralen Zeichenkanal oder gemäß kommunikationssystemspezifischer Protokolle für zentrale Zeichenkanäle gebildet sind.

5. Verfahren nach einem der Ansprüche 1 bis 4, dadurch **gekennzeichnet,** daß
- die zellenweise Zuordnung der Nachrichteninformationen (ni) eines Teil-Leitungsbündel (TLB1..3) zu virtuellen Kanälen (VC1..30), die jeweils zu einem ein Teil-Leitungsbündel repräsentierenden Pfad (VP1..3) zusammengefaßt sind,
- die Teil-Leitungsbündel-gemäße Trennung der die zusammengefaßten Signalisierungsinformationen (si) sowie deren Zuordnung zu dem betreffenden, ein Teil-Leitungsbündel (TLB1..3) repräsentierenden virtuellen Pfad (VP1..3), und
- das Entpacken der übermittelten Nachrichten- bzw. Signalisierungsinformationen (ni,si) sowie deren Zuordnung zu den jeweiligen Schmalband-Verbindungen (VC1..30) bzw. der zusätzlichen Schmalband-Verbindungen (CCS) des betreffenden, eingerichteten Teil-Leitungsbündeln (LB1..3) des mit jeweils einem weiteren Kommunikationssystem (KS1..3) verbundenen Leitungsbündels (LB)
in einer Interworking-Einheit (IWU1,2) des ATM-Kommunikationsnetzes (KN) durchgeführt wird.

6. Verfahren nach Anspruch 5, dadurch **gekennzeichnet,** daß die Interworking-Einheiten (IWU1,2) im Anschlußbereich von ATM-Kommunikationssystemen (ATM-KS) des ATM-Kommunikationsnetzes (KN) angeordnet sind.

7. Verfahren nach einem der vorhergehenden Ansprüche, dadurch **gekennzeichnet,** daß die Leitungsbündel (LB) der Kommunikationssysteme (KS1..3) eine standardisierte Übertragungsgeschwindigkeit von 1544kit/s oder 2048 kbit/s aufweisen und die Übertragungsgeschwindigkeit der Schmalband-Verbindungen (SV1..30,CCS) und der virtuellen Kanäle (VC1..30) 64 kbit/s sowie der virtuellen Pfade (VP1..3) n * 64 kbit/s beträgt.
